(19) Europäisches Patentamt
European Patent Office
Office européen des brevets

(11) **EP 3 069 185 B1**

(12) **FASCICULE DE BREVET EUROPEEN**

(45) Date de publication et mention
de la délivrance du brevet:
**05.05.2021 Bulletin 2021/18**

(21) Numéro de dépôt: **14799976.7**

(22) Date de dépôt: **31.10.2014**

(51) Int Cl.:
**G02B 21/24** (2006.01)      **G02B 21/26** (2006.01)
**G01J 9/00** (2006.01)

(86) Numéro de dépôt international:
**PCT/EP2014/073446**

(87) Numéro de publication internationale:
**WO 2015/071116 (21.05.2015 Gazette 2015/20)**

(54) **DISPOSITIF ET METHODE DE MISE AU POINT TRIDIMENSIONNELLE POUR MICROSCOPE**

DREIDIMENSIONALE FOKUSSIERUNGSVORRICHTUNG UND VERFAHREN FÜR EIN MIKROSKOP

THREE-DIMENSIONAL FOCUSING DEVICE AND METHOD FOR A MICROSCOPE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.11.2013 FR 1361065**
**30.06.2014 FR 1456113**

(43) Date de publication de la demande:
**21.09.2016 Bulletin 2016/38**

(73) Titulaires:
• **Université d'Aix-Marseille**
**13284 Marseille Cedex 07 (FR)**
• **Centre National de la Recherche Scientifique**
**75794 Paris Cedex 16 (FR)**

(72) Inventeurs:
• **WENGER, Jérôme**
**F-13127 Vitrolles (FR)**
• **BON, Pierre Dominique**
**F-33140 VILLENAVE D'ORNON (FR)**
• **MONNERET, Serge Olivier Pierre**
**F-13013 Marseille (FR)**

(74) Mandataire: **Osha Liang**
**2, rue de la Paix**
**75002 Paris (FR)**

(56) Documents cités:
WO-A1-2013/010859        WO-A1-2013/015143
DE-A1-102011 003 807     US-A1- 2009 147 355
US-A1- 2012 194 903      US-A1- 2012 300 293
US-A1- 2013 027 518

## Description

## Domaine technique de l'invention

La présente invention concerne un dispositif et une méthode de mise au point tridimensionnelle pour microscope.

## Etat de l'art

Les développements récents de l'imagerie biologique ont repoussé les limites des microscopes existants. Il est possible actuellement grâce à des microscopes optiques ultra résolus comme les microscopes PALM ou STORM d'atteindre une résolution de localisation des molécules observées au-delà de la limite de diffraction. Néanmoins, les instabilités inhérentes aux microscopes conduisent à une dérive de position de l'échantillon imagé, ce qui compromet la précision et l'exactitude de l'imagerie. Ces dérives peuvent être liées aux vibrations acoustiques et mécaniques résultant de l'environnement ainsi qu'aux variations de température, et peuvent se produire dans les trois directions. De plus, les temps d'acquisition des données obtenues par exemple avec un microscope PALM peuvent être longs, parfois plusieurs heures, ce qui augmente l'exigence en termes de stabilité du microscope. Dans ce contexte, il est donc recherché de maintenir la mise au point sur l'échantillon selon les trois dimensions avec une très bonne résolution temporelle et spatiale.

Différents types de procédé de mise au point tridimensionnelle ont été proposés en microscopie. Un de ces procédés, couramment utilisé en microscopie optique, consiste à injecter un faisceau lumineux issu d'une source type LED IR dans le microscope, puis à mesurer le signal réfléchi par la lamelle de l'échantillon (voir par exemple Zemek et al., "CRISP nearly eliminates microscopy focus drift", LASER FOCUS WORLD, 48(9), 9-10, 2012). Bien que ces systèmes soient couramment utilisés, la précision obtenue pour la mise au point selon l'axe optique ne dépasse pas 50 nm.

Dans le but d'obtenir une meilleure précision, d'autres techniques existent utilisant des repères micrométriques dans le champ de vision du microscope.

Par exemple, la demande de brevet US2013027518 décrit, dans un mode de réalisation, un dispositif de mise au point automatique pour un microscope dans lequel une source de lumière éclaire un échantillon et un élément de référence. L'élément de référence sert de repère et est tenu sur le support de l'échantillon. La dérive de position de l'échantillon selon l'axe z (axe optique de l'objectif de microscope) est alors corrigée grâce à une mesure de la variation d'une dimension transversale de l'image de l'élément de référence, la variation de la dimension transversale correspondant à une mesure de la valeur absolue de la variation de la position axiale de l'objet de référence. Bien que ce dispositif permette d'atteindre une précision de l'ordre d'une vingtaine de nanomètres, il nécessite d'exercer un contrôle de rétroaction en boucle fermée du plateau pour ajuster la position et évaluer le sens de variation de la position axiale de l'objet de référence.

Un autre exemple pour évaluer et donc pallier aux dérives de positionnement de l'échantillon observé dans un microscope est décrit dans la demande de brevet US2012300293. Celle-ci concerne la mesure en intensité de la lumière diffractée par des marqueurs de dimensions de 300 nm à 4 μm agencées pour former un réseau à deux dimensions et se trouvant sur un support d'un échantillon à observer. Cette technique permet d'obtenir des précisions théoriques de l'ordre de quelques dizaines de nanomètres mais nécessite la fabrication d'un réseau microscopique en 2 dimensions.

DE 10 2011 003807 A1 divulgue un procédé de focalisation automatique lors de l'analyse microscopique d'un objet. WO 2013/0010859 A1 divulgue une méthode pour la localisation tridimensionnelle en microscopie de super résolution d'une ou plusieurs particule(s) émettrices. La présente invention propose un dispositif et une méthode de mise au point tridimensionnelle pour microscope permettant notamment une mise au point automatique tridimensionnelle en une seule mesure et avec une résolution inférieure à 10 nm.

## RESUME DE L'INVENTION

Selon un premier aspect, l'invention concerne un dispositif pour la mise au point tridimensionnelle dans un microscope de résolution donnée comprenant notamment un détecteur pour la détection de phase et d'intensité d'un champ électromagnétique et des moyens de calcul.

Plus précisément, le détecteur est configuré pour déterminer dans un plan de mesure donné, une image en phase et en intensité d'un champ électromagnétique issu de l'interaction d'une onde lumineuse incidente avec un objet de référence situé dans un milieu de référence d'indice donné, l'objet de référence présentant un indice de réfraction complexe dont la partie réelle et/ou la partie imaginaire est différente respectivement de la partie réelle et/ou de la partie imaginaire de l'indice de réfraction du milieu de référence.

Les moyens de calcul sont configurés pour déterminer à partir de ladite moins une image en phase et en intensité, une variation de position tridimensionnelle de l'objet de référence.

Pour la mise en œuvre du dispositif, l'objet de référence est choisi solidaire d'un porte échantillon du microscope ; plus précisément l'objet de référence peut être immobile par rapport au porte échantillon ou présenter un déplacement connu par rapport au porte échantillon ou encore présenter un déplacement inférieur ou égal à une précision de pointé souhaitée. Les déposants ont montré qu'il est possible, à partir de l'analyse simultanée dans un plan de détection donné d'images en phase et en intensité du champ électromagnétique issu de l'interaction avec l'objet de référence, de déterminer de façon très précise les variations à la fois axiales et latérales de l'objet de référence, et par conséquent, les dérives du microscope.

Un tel dispositif peut être facilement intégré dans un microscope classique.

Selon une variante, l'onde lumineuse qui interagit avec l'objet de référence peut être émise par la source lumineuse du microscope.

Selon une variante de l'invention, le dispositif comprend une source d'émission propre pour l'émission d'un faisceau d'illumination de l'objet de référence. Un tel dispositif permet de choisir de manière indépendante de la source lumineuse du microscope les caractéristiques de la source d'émission du faisceau d'illumination de l'objet de référence.

Selon une variante de l'invention, les dimensions de l'objet de référence choisi pour la mise en œuvre du dispositif sont comprises entre 0.1 et 2 fois la résolution du microscope. En effet, bien que l'interaction soit possible entre l'onde lumineuse incidente et l'objet de référence quelle que soit la taille de l'objet de référence, une interaction plus forte est obtenue avec des objets de référence de dimensions petites, ce qui permet d'augmenter la précision de la mesure. Les dimensions de l'objet de référence doivent être suffisamment grandes cependant pour que la formation des images de l'objet de référence ne soit pas limitée par la résolution de la caméra.

Selon une variante, l'objet de référence peut faire partie de l'échantillon ; il s'agit par exemple d'un objet de référence intrinsèque ou endogène à l'échantillon. Ainsi, l'élément servant d'objet de référence est déjà présent dans l'échantillon.

Selon une autre variante, l'objet de référence est un élément externe à l'échantillon, destiné à être positionné dans un milieu de référence d'indice donné.

Par exemple, l'objet de référence comprend une particule en matériau métallique ou en matériau diélectrique, présentant respectivement une partie réelle de l'indice de réfraction ou une partie imaginaire de l'indice de réfraction différente de la partie réelle ou de la partie imaginaire de l'indice de réfraction du milieu de référence. Cette différence est avantageusement supérieure ou égale à 0,1, avantageusement supérieure ou égale à 0.5. Favorablement, l'utilisation de ce type de matériau permet d'observer des dépendances fortement contrastées de la phase et de l'intensité en fonction de la position de l'objet de référence, résultant d'interactions plus fortes entre l'onde lumineuse incidente et l'objet de référence.

Selon une variante de l'invention, le détecteur bidimensionnel de phase et d'intensité comprend un masque d'Hartmann modifié, permettant de mesurer simultanément l'intensité et la phase d'un champ électromagnétique.

Selon un deuxième aspect, l'invention concerne un microscope comprenant un porte échantillon, une source d'émission d'un faisceau d'illumination, un objectif de microscope, un dispositif de mise au point tridimensionnelle selon la présente description, des moyens de déplacement relatifs du porte échantillon et de l'objectif de microscope selon les trois dimensions.

Selon une variante de l'invention, le dispositif comprend des moyens de commande pour transmettre aux moyens de déplacement du microscope la variation calculée de la position tridimensionnelle de l'objet de référence, permettant la mise au point automatique du microscope.

Selon un troisième aspect, l'invention concerne une méthode de mise au point tridimensionnelle dans un microscope, comprenant :

- le choix d'un objet de référence dans un milieu de référence d'indice donné, le dit objet de référence étant solidaire d' un porte d'échantillon et présentant un indice de réfraction complexe dont la partie réelle et/ou la partie imaginaire est différente respectivement de la partie réelle et/ou imaginaire de l'indice de réfraction du milieu de référence;
- l'éclairage de l'objet de référence par une onde lumineuse incidente;
- l'acquisition d'au moins une image en phase et en intensité, dans un plan de mesure donné, d'un champ électromagnétique issu de l'interaction de l'onde lumineuse incidente avec l'objet de référence;
- la détermination, à partir de ladite au moins une image en phase et en intensité, d'une variation de position tridimensionnelle de l'objet de référence.

Selon une variante, l'objet de référence choisi fait partie de l'échantillon ; l'objet de référence est par exemple intrinsèque à l'échantillon.

Selon une variante, l'objet de référence est un objet externe à l'échantillon et la méthode de mise au point tridimensionnelle comprend le positionnement de l'objet de référence dans le milieu de référence.

Selon une variante de l'invention, la méthode de mise au point comprend une étape préalable de calibration, l'étape de calibration comprenant la détermination, pour une série de positions axiales de l'objet de référence, de l'intensité et de la phase en un point donné du plan de mesure.

La calibration permet ainsi de caractériser le champ électromagnétique issu de l'interaction entre l'onde incidente et l'objet de référence par exemple au moyen d'abaques donnant la phase et l'intensité en fonction de la position axiale de l'objet de référence et de faciliter l'application de la méthode de mise au point tridimensionnelle. L'acquisition d'une image ou d'une série d'images en un seul plan de mesure suffit en cours d'opération pour connaître très précisément la valeur et le sens de la variation axiale de l'objet de référence, la variation latérale pouvant être déterminée sur l'image en phase ou en intensité.

Selon une variante de l'invention, l'étape de calibration comprend le calcul d'images en phase et en intensité pour différentes positions axiales de l'objet de référence en utilisant un algorithme de propagation, permettant l'établissement d'abaques sans mesure préalable, en simulant la forme du champ électromagnétique résultant de l'interaction entre l'onde lumineuse incidente et l'objet de référence, dont les caractéristiques sont connues.

Selon une variante de l'invention, le calcul d'images en phase et en intensité lors de la calibration se base sur au moins une image de l'objet de référence acquise au préalable, permettant d'en déduire les abaques sans connaitre toutes les caractéristiques de l'objet de référence, du milieu de référence et de la source d'émission.

Selon une variante de l'invention, la méthode de mise au point tridimensionnelle comprend en outre une étape de transmission à des moyens de déplacement etc. de la variation calculée de la position tridimensionnelle de l'objet de référence, permettant de réaliser une mise au point automatique.

**BREVE DESCRIPTION DES DESSINS**

D'autres avantages et caractéristiques de l'invention apparaîtront à la lecture de la description, illustrée par les figures suivantes :

- Figure 1A, un schéma illustrant un microscope équipé d'un dispositif de mise au point tridimensionnelle fonctionnant en transmission, selon un exemple de réalisation;
- Figure 1B, un schéma illustrant un microscope équipé d'un dispositif de mise au point tridimensionnelle fonctionnant en réflexion, selon un exemple de réalisation de l'invention;
- Figures 2A à 2C, des schémas illustrant des exemples d'objets de référence pour un dispositif de mise au point selon la présente description;
- Figures 3A à 3D, des schémas illustrant différentes configurations de positionnement de l'objet de référence par rapport au porte échantillon;
- Figure 4A à 4F, des exemples d'images en phase et en intensité d'un champ électromagnétique issu de l'interaction d'une onde incidente avec un objet de référence formé d'une particule métallique à différentes positions axiales de l'objet de référence;
- Figures 5A et 5B, des exemples de graphiques, obtenus expérimentalement et numériquement, représentant respectivement l'intensité et la phase d'un champ électromagnétique issu de l'interaction entre une onde incidente et un objet de référence formé d'une particule métallique, en fonction de la position axiale de l'objet de référence;
- Figures 6A et 6B, des exemples de graphiques, obtenus numériquement, représentant respectivement l'intensité et la phase d'un champ électromagnétique issu de l'interaction entre une onde incidente et l'objet de référence en fonction de la position axiale de l'objet de référence, pour un objet de référence en matériau métallique et pour un objet de référence en matériau diélectrique;
- Figure 7A et 7B, des exemples de graphiques représentant respectivement la sensibilité relative en phase et en intensité en fonction de la longueur d'onde d'illumination de l'objet de référence;
- Figure 8, un graphique représentant le déplacement nécessaire pour la mise au point calculé au moyen d'un système de mise au point automatique standard et calculé par un exemple de dispositif selon la présente description.

DESCRIPTION DETAILLEE

Dans les figures, les éléments identiques sont indiqués par les mêmes références.

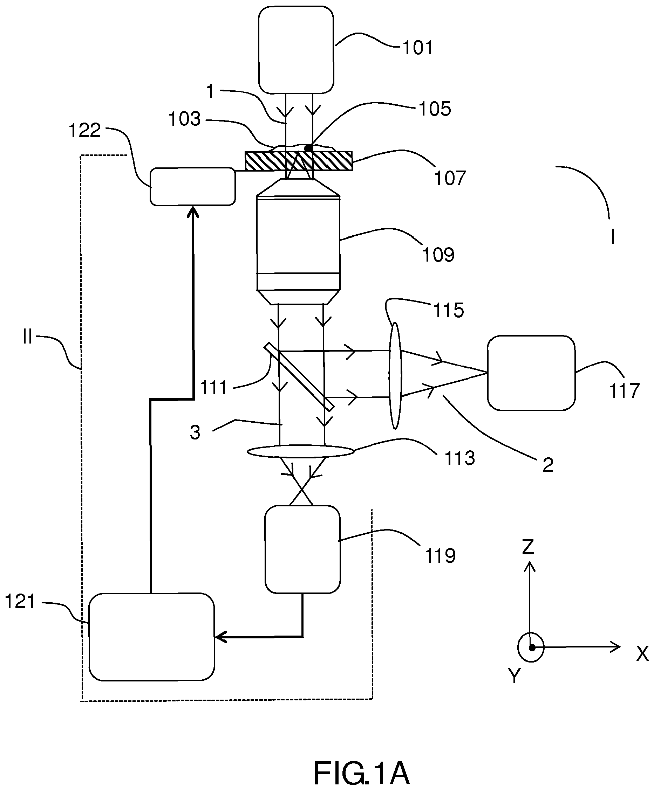

La figure 1A illustre un exemple d'un microscope I intégrant un dispositif de mise au point II tridimensionnelle selon une variante de l'invention mettant en œuvre un éclairage en transmission.

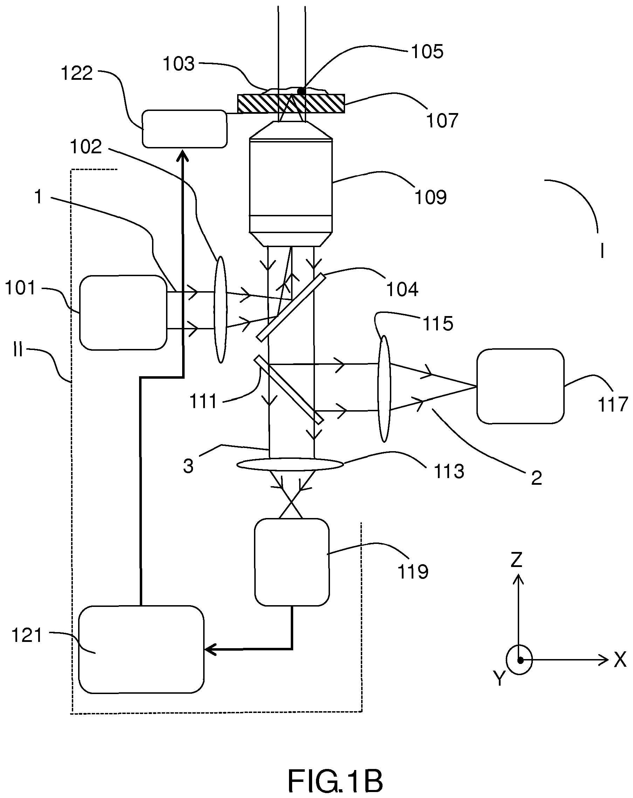

Comme illustré sur l'exemple de la figure 1A, le microscope comprend une voie d'illumination 1 ainsi qu'une première voie de détection 2. La voie d'illumination 1 comprend une source d'émission 101 d'un faisceau d'illumination collimaté et uniforme, telle qu'une source lumineuse cohérente, par exemple un éclairage Kôhler permettant d'obtenir un éclairage homogène sur un échantillon 103 disposé sur un porte échantillon 107. La source d'émission est par exemple une source monochromatique. La voie de détection 2 est destinée à former une image d'une zone d'intérêt de l'échantillon sur une surface de détection d'un détecteur matriciel 117, par exemple une caméra CCD ou une caméra amplifiée de type EMCCD (abréviation de l'expression anglo-saxonne «Electron Multiplying Coupled Charge Display»). La première voie de détection 2 comprend un objectif de microscope 109 destiné à travailler par exemple dans une configuration optique de travail foyer-infini, c'est-à-dire que, dans la configuration optimale de travail, le faisceau émis par un échantillon 103 au centre du champ objet (« plan de travail ») de l'objectif de microscope est un faisceau collimaté en sortie de l'objectif de microscope 109. La première voie de détection comprend également des éléments optiques permettant la formation de l'image sur la surface de détection, les éléments optiques comprenant par exemple un système optique d'imagerie objectif 115 et éventuellement des moyens de déflexion 111. Le microscope comprend en outre des moyens de déplacement 122 relatifs entre le porte échantillon 107 et l'objectif de microscope 109 pour ajuster la mise au point sur la zone d'intérêt de l'échantillon. Dans l'exemple de la figure 1, les moyens de déplacement comprennent par exemple une plateforme motorisée, par exemple une plateforme piézoélectrique, permettant de déplacer le porte échantillon 107 dans un plan latéral XY perpendiculaire à l'axe optique de l'objectif de microscope ainsi que selon l'axe Z parallèle à l'axe optique de l'objectif de microscope.

Un tel microscope est caractérisé de façon classique par une « résolution » proportionnelle au rapport entre la longueur d'onde centrale de la bande spectrale de la source d'illumination 101 et l'ouverture numérique de l'objectif de microscope 109.

Comme illustré sur l'exemple de la figure 1A, le microscope I comprend en outre un dispositif de mise au point tridimensionnelle II.

Le dispositif pour la mise au point tridimensionnelle II comprend dans l'exemple de la figure 1 un objet de référence 105 destiné à être positionné dans un milieu de référence d'indice donné, l'objet de référence étant solidaire du porte échantillon 107. Alternativement, l'objet de référence peut faire partie de l'échantillon, comme cela sera décrit plus en détails par la suite.

Le dispositif pour la mise au point tridimensionnelle II comprend par ailleurs un détecteur 119 permettant de déterminer dans un plan de mesure donné, une image en phase et en intensité d'un champ électromagnétique issu de l'interaction d'une onde incidente avec l'objet de référence, et des moyens de calcul 121 permettant de déterminer à partir d'au moins une image en phase et en intensité dudit champ électromagnétique, une variation de positionnement tridimensionnel de l'objet de référence. Ces moyens de calcul peuvent être reliés à des moyens de commande de la platine 122 pour contrôler le déplacement relatif entre l'objectif de microscope et le porte-échantillon et assurer ainsi par exemple une mise au point automatique.

Dans l'exemple de la figure 1A, l'onde incidente est issue de la source d'illumination 101 du microscope. Cependant, le dispositif de mise au point tridimensionnelle peut également comprendre une source spécifique comme cela sera décrit ultérieurement.

Le plan de mesure est avantageusement sensiblement confondu avec un plan situé au voisinage du plan conjugué de l'objet de référence 105 afin de maximiser la sensibilité du dispositif, lorsque le dispositif pour la mise au point tridimensionnelle II est intégré dans le microscope I. Ainsi, dans l'exemple de la figure 1, le microscope I comprend une deuxième voie de détection 3 pour la mise au point tridimensionnelle, la deuxième voie de détection 3 comprenant dans l'exemple de la figure 1, l'objectif de microscope 109 commun avec la voie de détection 2 du microscope et un objectif 113.

Selon une variante de l'invention illustrée sur la figure 1B, l'éclairage de l'échantillon est en réflexion. Le faisceau d'illumination est dans cet exemple réfléchi par une lame 104, par exemple une lame dichroïque ou une lame semi-réfléchissante permettant de laisser passer les rayons collectés, vers l'objectif. Là encore, la source d'émission peut faire partie du dispositif de microscope ou du dispositif de mise au point de façon indépendante au dispositif de microscope.

Selon la présente description, l'objet de référence choisi pour la mise en œuvre de la mise au point tridimensionnelle présente un indice de réfraction complexe dont la partie réelle et/ou la partie imaginaire est différente respectivement de la partie réelle et/ou la partie imaginaire de l'indice de réfraction du milieu de référence, de telle sorte à générer une modification du champ électromagnétique de l'onde incidente qui interagit avec l'objet de référence. Dans le cas où l'objet de référence est un élément externe à l'échantillon, celui-ci peut être par exemple en matériau métallique avec une partie imaginaire de l'indice complexe prédominante ou en matériau diélectrique avec une partie réelle de l'indice complexe prédominante.

Par milieu de référence, on entend dans la présente description tout milieu en contact avec l'objet de référence. Ce milieu peut être notamment l'échantillon à observer lui-même, un substrat d'un porte-échantillon, l'air ou le gaz environnant.

Avantageusement, la variation d'indice réel ou imaginaire entre le milieu de référence et l'objet de référence est supérieure ou égale à 0,1.

Selon une variante, l'objet de référence peut faire partie de l'échantillon ; plus précisément, il peut s'agir d'un élément intrinsèque ou « inhérent » à l'échantillon. Dans tous les cas, l'élément de l'échantillon choisi comme objet de référence présente respectivement une partie réelle de l'indice de réfraction ou une partie imaginaire de l'indice de réfraction différente de la partie réelle ou de la partie imaginaire de l'indice de réfraction du milieu de référence. Selon cette variante, l'objet de référence peut être notamment une partie d'une cellule telle qu'une organelle, une vésicule, un noyau, un nucléole, ou une cellule dans son intégralité telle qu'une bactérie, un débris ou un résidu présent dans l'échantillon. Dans le cas où l'objet de référence est à l'intérieur de l'échantillon, on peut considérer que celui-ci est solidaire du porte échantillon, si son déplacement théorique par rapport aux structures d'intérêt (*i.e.* celles observées par l'utilisateur et nécessitant un autofocus 3D) est connu, ou si son déplacement pendant le temps de mesure est inférieur ou égal à une précision de pointé souhaitée, typiquement 1/10 de la résolution du microscope. Néanmoins, préférentiellement, selon cette variante, l'objet de référence est immobile dans le référentiel du microscope ; ce cas est couramment rencontré dans l'étude d'échantillon biologique, lorsque ce dernier est étudié après avoir subi un protocole dit de fixation.

Dans le cas d'un objet de référence défini comme un élément intrinsèque à l'échantillon, celui-ci peut être choisi et identifié comme « objet de référence » grâce à une image de l'échantillon en phase ou en intensité, selon que l'objet est respectivement plus déphasant ou plus absorbant que son milieu environnant.

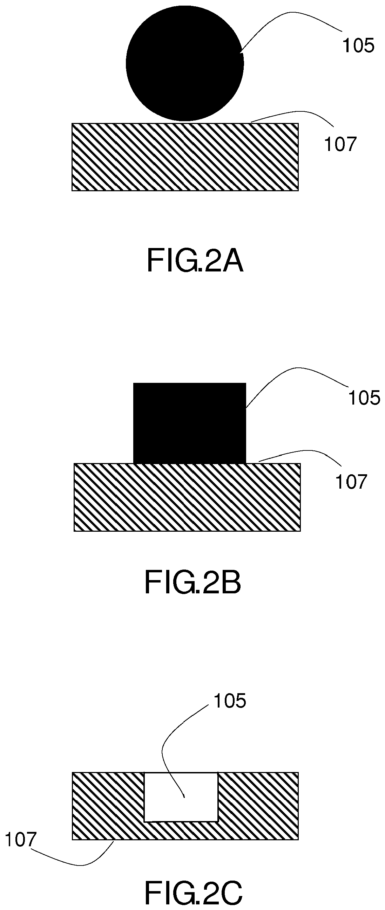

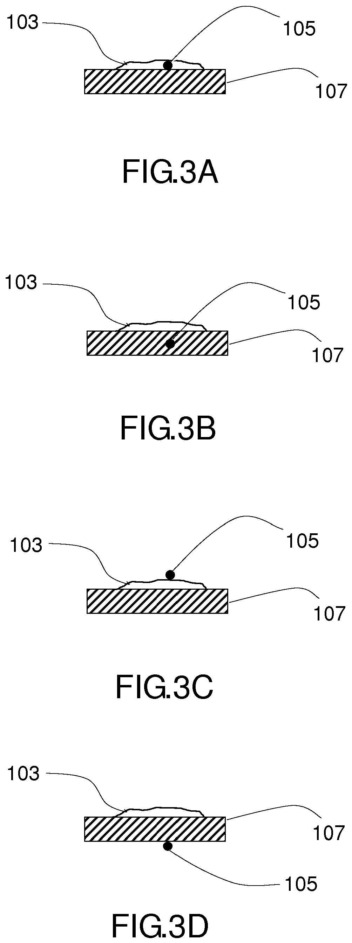

Les figures 2A à 2C illustrent différentes variantes d'objet de référence dans le cas d'un objet de référence externe à l'échantillon. L'objet de référence est par exemple une particule ou un ensemble de particules déposées sur un substrat d'un porte-échantillon 107 (figure 2A), un plot ou un ensemble de plots lithographiés sur un substrat d'un porte-échantillon (figure 2B), une gravure ou un ensemble de gravures faites dans le porte échantillon lui-même, les cavités ainsi formées pouvant être remplies d'un liquide d'indice donné (Figure 2C). Selon une variante, l'objet de référence peut comprendre une combinaison de ces différents éléments.Tels que présentés dans les exemples des Figures 3A à 3D, les objets de référence peuvent être positionnés sur la surface supérieure du substrat du porte-échantillon (côté échantillon-Figure 3A), sur la surface inférieure du substrat (côté objectif-Figure 3D), dans la masse du substrat (Figure 3B), ou directement fixés à l'échantillon (Figure 3C).

Il peut y avoir un nombre quelconque (≥1) d'objets de référence, internes ou externes à l'échantillon, disposés aléatoirement ou régulièrement, ce qui permet notamment d'augmenter la sensibilité du dispositif de mise au point.

Le dispositif de mise au point tridimensionnelle selon la présente description est basé sur l'analyse de la variation de phase et d'intensité du champ électromagnétique issu de l'interaction entre l'onde incidente et l'objet de référence placé dans le champ d'observation de l'échantillon. Les déposants ont en effet montré que l'analyse simultanée, en un plan de détection donné, d'images en phase et en intensité du champ électromagnétique issu de l'interaction avec l'objet de référence permet de déterminer de façon très précise les variations axiales et latérales de l'objet de référence et donc les dérives du microscope. L'interaction entre l'onde incidente et l'objet de référence peut consister en différentes phénomènes physiques en fonction de la nature de l'objet de référence, per exemple des phénomènes de diffusion ou d'absorption, ces phénomènes pouvant être résonants dans certains cas qui seront décrits plus en détails par la suite.

Pour obtenir une interaction forte entre l'objet de référence et l'onde d'illumination, il est avantageux que les éléments formant l'objet de référence (par exemple particules, plots, gravures, etc.) présentent des dimensions de l'ordre de la résolution du microscope. Avantageusement, les tailles moyennes des éléments formant de l'objet de référence sont comprises entre 0.1 et 2 fois la résolution du microscope, avantageusement entre 0.5 et 1 fois la résolution du microscope. Ainsi, pour un objectif de microscope ayant une ouverture numérique entre 0.5 et 1.3 et une source d'illumination émettant à une longueur d'onde d'illumination comprise entre 500 et 800 nm les dimensions de l'objet de référence (ou des éléments formant l'objet de référence) sont comprises entre 40 nm et 3 $\mu$m.

La détection d'images en phase et en intensité est par exemple réalisée au moyen d'un détecteur 119 bidimensionnel mais il peut s'agir également d'un détecteur unidimensionnel ou ponctuel, combiné avec un système de balayage.

Avantageusement, le détecteur 119 permet une analyse simultanée de la phase et de l'intensité. Il s'agit par exemple d'un dispositif d'interférométrie à décalage multilatéral utilisant un masque Hartmann modifié, par exemple par superposition d'un réseau d'amplitude de période p donnée et d'un réseau de phase de période 2.p , par exemple un détecteur de type SID4 de la Société Phasics® qui permet d'établir une cartographie simultanée en phase et en intensité d'un front d'onde (P. Bon et al Opt. Express 17, 13080 (2009)). D'autres dispositifs permettent d'établir la cartographie en phase du front d'onde et pourront être combinés à un détecteur d'intensité pour l'analyse simultanée de la phase et de l'intensité. Les analyseurs de front d'onde peuvent comprendre par exemple et de façon non limitative un analyseur de courbure, un capteur de Shack-Hartmann, un montage de microscopie de phase quantitative, par exemple un dispositif d'holographie numérique par montage Mach-Zender ou Michelson).

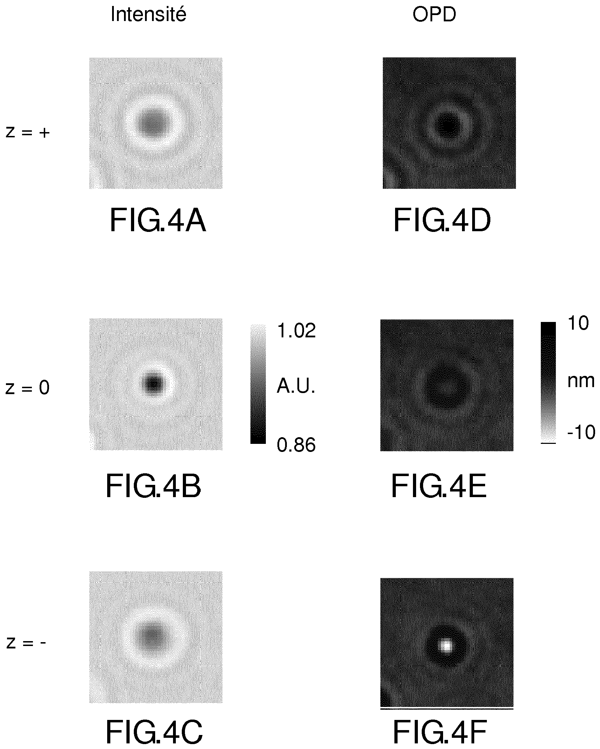

La figure 4 présente des exemples d'images en intensité (fig.4A, fig.4B, fig.4C) et en phase (fig.4D, fig.4E, fig.4F) acquises par un détecteur bidimensionnel de type Phasics®, le plan de mesure étant conjugué avec le plan de travail de l'objectif de microscope.

Plus précisément, ces images sont obtenues avec un objet de référence comprenant une particule métallique en or de diamètre 150 nm, disposée de façon solidaire avec le porte-échantillon, et illuminée par une onde d'illumination de longueur d'onde 670 nm, à différentes positions relatives de la particule par rapport au plan de travail de l'objectif de microscope. La position notée z = 0 correspond à la position de mise au point, pour laquelle l'objet de référence est dans le plan de travail de l'objectif de microscope, conjugué avec le plan de mesure du détecteur de phase et d'intensité. Les positions z+ et z- correspondent à des positions de l'objet de référence décalées selon l'axe optique de l'objectif de microscope, de part et d'autre de la position z = 0. Plus précisément, la position z+ correspond à un éloignement de l'objet de référence par rapport à l'objectif de microscope et la position z- à un rapprochement. Les images dites « en phase » représentent une différence de phase par rapport à une phase de référence, et plus précisément une différence de chemin optique ou OPD pour « Optical Phase Différence » par rapport à un chemin optique de référence calculé dans une zone éloignée de l'objet de référence, par exemple en bord de champ d'observation, lorsque la particule métallique est en z = 0. D'autre part, même si dans la présente demande, seule l'intensité du champ électromagnétique est considérée, il apparaîtra pour l'homme du métier que les images dites « en intensité » peuvent être représentées tout aussi bien en amplitude, l'amplitude du champ électromagnétique pouvant être utilisée dans les calculs de propagation par exemple.

Sur la figure 4, l'intensité est représentée en unités arbitraires (« A.U. ») tandis que la différence de chemin optique est représentée en nm. Les images des figures 4A, 4B, 4C en intensité font apparaître au centre du champ (correspondant au centre de la particule) un minimum d'intensité en z = 0 (fig.4B), l'intensité augmentant de part et d'autre de la position de mise au point (fig.4A et 4C). Sur les images en phase, on vérifie qu'au centre du champ la différence de phase est nulle au point de mise au point (fig.4E), ce point étant pris comme point de référence pour la phase, et on constate que de part et d'autre de la position de mise au point, la différence de phase au centre du champ est respectivement positive (fig.4D en z+) et négative (fig.4F en z-).

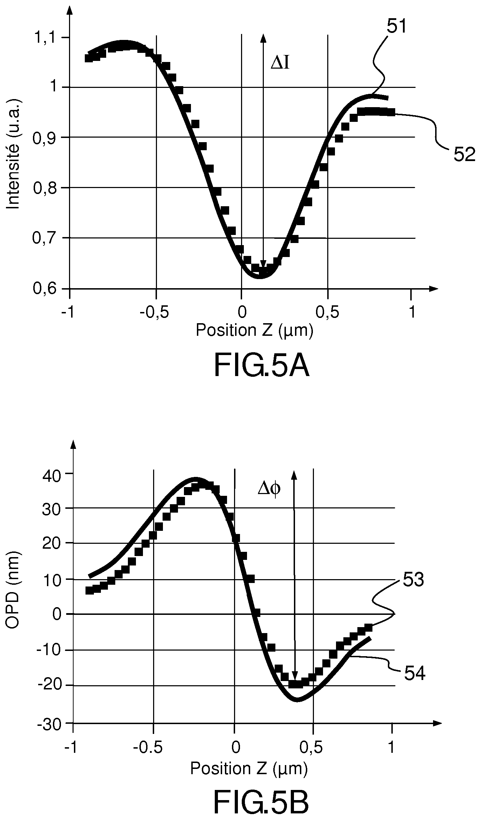

Les figures 5A et 5B illustrent ainsi (courbes 51 et 53 respectivement), l'intensité et la phase (ou plus précisément la différence de chemin optique OPD), mesurées à partir d'images telles que représentées sur la figure 4, en fonction du décalage axial z de l'objet de référence par rapport à la position z = 0 de mise au point. Ces courbes sont obtenues aves les mêmes conditions expérimentales que celles de la figure 4 (particule en or de diamètre 150 nm et longueur d'onde d'illumination de 670 nm).

On vérifie sur ces courbes le comportement pair de la fonction en intensité et impair de la fonction en phase du champ électromagnétique issu de l'interaction de l'onde incidente et de l'objet de référence métallique mesuré autre du champ, en fonction de la position axiale de la particule. On observe qu'à la position de mise au point (z = 0), l'intensité est minimale et la pente de la phase est maximale. Ainsi dans l'exemple de la figure 5B, la pente est de - 98.2nm×μm-1 à la position z = 0. Les variations de phase et d'intensité telles qu'illustrées peuvent être exploitées pour déterminer très précisément la variation de déplacement axiale de la particule, comme cela sera décrit plus en détails par la suite. En effet, sachant que la sensibilité d'une mesure de phase est de $\dfrac{1}{\sqrt{N}}$ ]nm où N est le nombre de mesures moyennées, on peut estimer grossièrement la précision de localisation axiale d'une position de mise au point à

$$\Delta z = \frac{1\ \mathrm{nm}}{\sqrt{N}} \times \frac{1}{98.2\ \mathrm{nm} \cdot \mu\mathrm{m}^{-1}} \approx \frac{10\ \mathrm{nm}}{\sqrt{N}}$$ soit environ 1 nm pour 10 mesures moyennées. . Cette précision est bien en dessous de la taille de la particule.

Les figures 5A et 5B font également apparaître des courbes 52 et 54 calculées en appliquant un algorithme de propagation numérique à un couple d'images Intensité/Phase prise à une position donnée de l'axe z, avantageusement à la position de mise au point.

L'algorithme utilisé est un algorithme de propagation numérique du champ électromagnétique. Un algorithme de propagation numérique du champ électromagnétique est par exemple décrit dans Schnars et al ("Digital recording and numerical reconstruction of holograms" Meas. Sci. Technol. 13 R85-R101 (2002)). Un tel algorithme permet à partir d'une première image en phase et en intensité déterminée dans un premier plan de calculer une deuxième image en phase et en intensité dans un deuxième plan séparé du premier plan par une distance de propagation donnée. L'algorithme de propagation peut être appliqué en se basant sur la totalité de l'image que l'on cherche à « propager » ou sur une zone de l'image, ce qui permet de gagner en vitesse d'acquisition. Cette zone de l'image peut être fixe latéralement ou mobile pour rester centrée sur une zone d'intérêt de l'image grâce par exemple à un algorithme de suivi d'image (ou « tracking »).

On observe sur les figures 5A et 5B que les courbes expérimentales (51, 53) et les courbes calculées au moyens de l'algorithme de propagation (courbes 52, 54) sont similaires. Ainsi, on obtient la même courbe de variation en phase ou en intensité si l'on fait une série de mesures du champ électromagnétique en un point du champ en faisant varier la position axiale de l'objet de référence ou si l'on fait une seule mesure d'intensité et de phase dans un plan donné et qu'on applique l'algorithme de propagation numérique. Il apparait ainsi possible d'estimer le déplacement axial de l'objet de référence en une seule mesure.

Il apparaît par ailleurs que la nature de l'objet de référence modifie du fait des interactions mises enjeu la forme du champ électromagnétique.

Les déposants ont montré que les résultats présentés précédemment avec une particule métallique pouvaient être obtenus également avec un objet de référence en matériau diélectrique, de préférence un objet présentant une différence d'indice importante avec le milieu de référence avec lequel il est en contact, par exemple une particule en matériau diélectrique de haut indice. Cette différence d'indice est typiquement supérieure ou égale à 0,1, avantageusement supérieure ou égale.

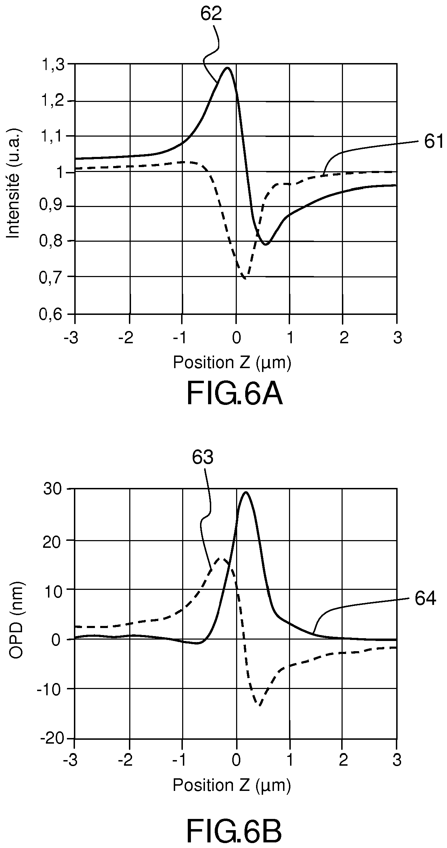

Ainsi, les figures 6A et 6B représentent le résultat de l'algorithme de propagation numérique décrit précédemment appliqué pour calculer l'intensité et la phase au centre du champ en fonction de la position axiale de l'objet de référence pour un objet de référence formé en matériau métallique (courbes 61 et 63), et un objet de référence formé en matériau diélectrique (courbes 62 et 64). L'objet de référence métallique est comme précédemment une particule en or de diamètre 150 nm et l'objet de référence diélectrique est une particule en polystyrène de diamètre 300 nm. La longueur d'onde d'illumination est 670 nm.

On observe sur les figures que dans le cas d'une particule métallique, la dépendance de l'intensité avec la position z est une fonction paire (courbe 61) et la dépendance de la phase avec la position z est une fonction impaire (courbe 63) alors que dans le cas d'une nanoparticule en matériau diélectrique, la dépendance de l'intensité avec la position z est une fonction impaire (courbe 62) et la dépendance de la phase avec la position Z est une fonction paire (courbe 64). Cette différence de comportement peut s'expliquer à partir de la prépondérance de la partie réelle ou imaginaire de l'indice de réfraction complexe de l'objet de référence. La partie réelle de l'indice agit sur la phase de l'onde et la partie imaginaire affecte l'intensité de l'onde. Ainsi une particule d'indice réel fort (cas de la particule diélectrique) a une signature importante en phase en condition d'imagerie (valeur de l'OPD est maximum en z = 0) et la signature s'estompe de part et d'autre du plan d'imagerie (comportement pair). Au contraire, en intensité la signature est faible en condition d'imagerie (valeur de l'intensité est quasi nulle en z = 0). Pour une particule d'indice imaginaire fort (cas de la particule métallique) le comportement de l'intensité (la valeur de l'intensité est minimale en z = 0) et de la phase (la valeur de l'OPD est quasi nulle en z = 0) est inversé.

L'analyse des images en phase et en intensité ainsi réalisée permet de mettre au point une méthode de mise au point tridimensionnelle dans un microscope rapide et extrêmement précise.

Il est en effet possible par acquisition d'une image ou d'une série de N images moyennées pour obtenir une meilleure précision, de déterminer le déplacement axial et le sens de déplacement d'un objet de référence solidaire du porte échantillon et d'en déduire le déplacement relatif à effectuer entre l'objectif de microscope et le porte échantillon pour obtenir par exemple une mise au point automatique qui compense les dérives dues par exemple aux variations de température ou aux vibrations.

Selon une variante de mise en œuvre de la méthode, à partir d'une image ou d'une série d'images acquises en un plan de mesure donné, on détermine le meilleur plan de mise au point axial en utilisant un algorithme de propagation numérique du champ électromagnétique, par exemple l'algorithme décrit précédemment. On en déduit alors la variation de déplacement axial et le sens de déplacement. La variation latérale de l'objet de référence peut être mesurée sur les images initiales ou sur les images reconstruites après propagation. Notamment, la mesure de déplacement latéral sera plus précise sur l'image reconstruite correspondant à l'image obtenue lorsque l'objet de référence est dans le plan de mise au point.

Selon une variante de l'invention, on peut avoir recours à une calibration du dispositif de mise au point tridimensionnelle.

Par exemple, la calibration peut comprendre l'enregistrement d'abaques telles qu'illustrées sur les figures 5A et 5B.

La calibration peut être théorique, en supposant connus l'objet de référence et le milieu de référence (en taille et en indice) ainsi que la source d'émission. La calibration théorique comprend alors la simulation de la propagation du champ électromagnétique issu de l'interaction de l'onde incidente et de l'objet de référence pour différentes positions de l'objet de référence et l'établissement des abaques en déterminant en un point du champ la valeur de la phase et de l'intensité. Avantageusement, la calibration est faite en mesurant la phase et l'intensité au centre du champ, correspondant par exemple au centre d'une particule formant l'objet de référence. La courbe impaire, soit en phase soit en intensité, permet de déterminer avec un point de mesure la valeur et le sens du déplacement axial.

Avec une telle calibration, lors de la mise en œuvre de la méthode de mise au point tridimensionnelle, il suffit ainsi de faire l'acquisition d'une image ou d'une série d'images en un seul plan de mesure pour connaître très précisément la valeur et le sens de la variation axiale de l'objet de référence, la variation latérale pouvant être déterminée sur l'image en phase ou en intensité, avantageusement sur la courbe paire. Alternativement, le déplacement axial étant connu, il est possible d'envoyer une commande de déplacement relatif de l'objectif de microscope et du porte échantillon pour positionner l'objet de référence dans le plan de mise au point puis de mesurer très précisément le déplacement latéral sur la nouvelle image acquise. Alternativement, le déplacement axial étant connu, il est possible de calculer l'image à la position de mise au point en utilisant l'algorithme de propagation pour mesurer le déplacement latéral sur l'image ainsi reconstruite.

Selon une variante, la calibration peut être expérimentale et se baser sur au moins une image de l'objet de référence acquise au préalable. Ainsi, l'objet de référence ou l'objectif de microscope ou encore le détecteur est déplacé axialement et, pour chaque valeur de déplacement, une image ou une série d'images en phase et en intensité est acquise. On en déduit alors les abaques telles qu'illustrés par exemple sur les figures 5A et 5B dans le cas d'une particule métallique. Alternativement, la calibration peut être obtenue avec une seule acquisition d'images en phase et en intensité en un plan donné puis les abaques sont obtenus en procédant à une propagation du champ électromagnétique et à une reconstruction des images dans les différents plans.

La sensibilité de la méthode de mise au point tridimensionnelle dépend de l'interaction entre l'onde incidente et l'objet de référence. On peut l'exprimer par exemple à partir des amplitudes de variation d'intensité $\Delta I$ ou de phase $\Delta \Phi$ telles qu'illustrées sur les figures 5A et 5B par exemple.

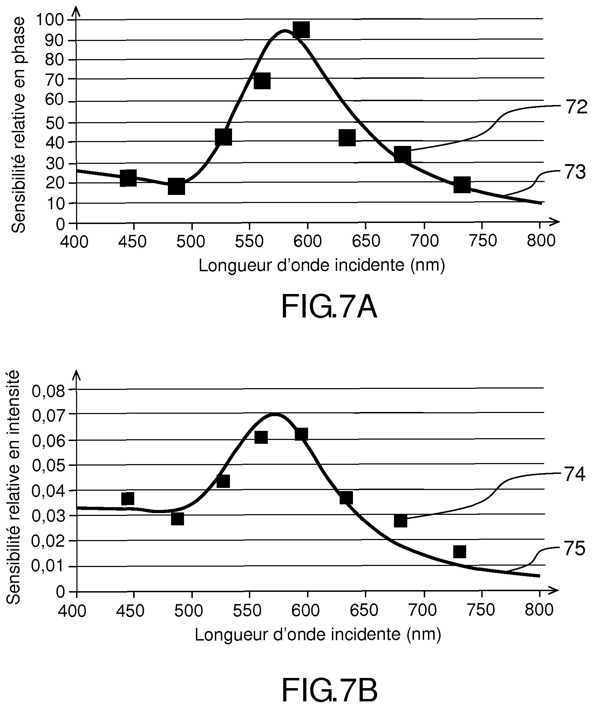

A titre d'exemple, les figures 7A et 7B représentent l'amplitude de variation de signal mesurée respectivement en intensité et en phase en fonction de la longueur d'onde d'observation pour une particule d'or de 100nm de diamètre. La variation de signal est exprimée en sensibilité relative ce qui signifie que les grandeurs sont en unité arbitraire. Les résultats expérimentaux sont présentés par des points carrés (respectivement courbes 71 et 72 pour la sensibilité en phase et en intensité) et sont comparés à une courbe théorique représentant la section efficace de diffusion de la nanoparticule calculée suivant la théorie de Mie.

On observe sur ces courbes une dépendance de la sensibilité en fonction de la longueur d'onde. Cette dépendance s'explique par les effets de résonance plasmoniques mis en jeu dans les particules métalliques pour des rapports particuliers entre la taille de la particule et la longueur d'onde d'illumination. Dans cet exemple, le signal est maximisé en utilisant une longueur d'onde d'illumination de 600 nm pour une particule d'or de 100nm de diamètre. Ainsi, dans le cas d'utilisation d'objet de référence comprenant des particules métalliques, il sera intéressant pour le dispositif de mise au point tridimensionnelle de choisir une source spécifique de longueur d'onde adaptée.

La méthode ainsi décrite peut fonctionner en continue ou ponctuellement à des moments donnés ou choisis par l'utilisateur.

Les déposants ont montré que la méthode de mise au point tridimensionnelle selon la présente description permet des mises au point automatiques rapides, typiquement de l'ordre de 10msec, en plus de présenter une très bonne précision. Le temps pour la mise au point dépend à la fois de la vitesse d'acquisition du détecteur (typiquement de l'ordre de 60 images par secondes pour une pleine image) et de la sensibilité du détecteur, plus le détecteur étant sensible, moins le nombre d'images à moyenner devant être important.

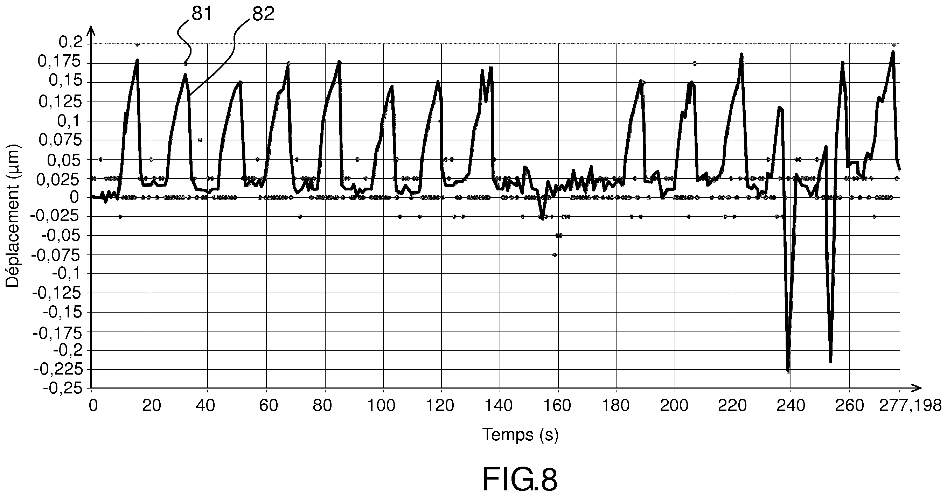

La figure 8 illustre ainsi la comparaison entre une mise au point automatique obtenue au moyen de la présente description (courbe 82) et une mise au point automatique obtenue dans un microscope standard du commerce (courbe 81). La courbe 81 est obtenue avec un microscope Nikon-Ti® équipé d'un système commercial de mise au point axial de type « perfect focus system » tel que décrit dans Zemek et al., ("CRISP nearly eliminates microscopy focus drift", LASER FOCUS WORLD, 48(9), 9-10, 2012). La courbe 82est obtenue avec une mise au point automatique mise en œuvre au moyen de la méthode selon la présente description, dans laquelle on observe en illumination en transmission un objet de référence de type particule d'or de 100 nm de diamètre éclairée par une onde de longueur d'onde 670 nm. Une calibration unique est faite au temps t = 0 s.

Ces deux courbes mettent en évidence la faisabilité de la méthode selon la présente description qui présente par ailleurs une très bonne résolution temporelle.

La méthode de mise au point tridimensionnelle décrite dans la présente description peut être utilisée pour effectuer une mise au point automatique en temps réel ou à certains moments de l'expérience, dans un microscope. Alternativement, la méthode peut être utilisée également pour contrôler le positionnement d'un échantillon. Dans ces conditions, la mesure sert de boucle de rétroaction pour asservir précisément le positionnement de l'échantillon dans le cas où le système de déplacement n'effectuerait pas son déplacement théorique.

Bien que décrite à travers un certain nombre d'exemples de réalisation détaillés, le dispositif de mise au point tridimensionnel selon l'invention comprend différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

## Revendications

1. Dispositif (II) pour la mise au point tridimensionnelle dans un microscope (I) de résolution donnée, comprenant :

   - un détecteur (119)
   - des moyens de calcul (121)

   **caractérise en ce que**
   ledit detecteur est configuré pour déterminer, dans un plan de mesure donné, une image en phase et en intensité d'un champ électromagnétique issu de l'interaction d'une onde lumineuse incidente avec un objet de référence (105) situé dans un milieu de référence d'indice donné, l'objet de référence présentant un indice de réfraction complexe dont la partie réelle et/ou la partie imaginaire est différente respectivement de la partie réelle et/ou la partie imaginaire de l'indice de réfraction du milieu de référence; et **en ce que** lesdits moyens de calcul (121) sont configurés pour déterminer, à partir de ladite au moins une image en phase et en intensité, une variation de position tridimensionnelle de l'objet de référence (105).

2. Dispositif selon la revendication 1 comprenant une source d'émission d'un faisceau d'illumination de l'objet de référence (105).

3. Dispositif selon l'une quelconque des revendications précédentes, dans lequel les dimensions de l'objet de référence (105) sont comprises entre 0,1 et 2 fois la résolution du microscope (I).

4. Dispositif selon l'une quelconque des revendications précédentes, dans lequel la différence d'indice entre l'objet de référence et le milieu de référence est supérieure ou égale à 0.1, avantageusement supérieure ou égale à 0.5.

5. Dispositif selon l'une quelconque des revendications précédentes, comprenant en outre ledit objet de référence, ledit objet de référence étant destiné à être positionné dans un milieu de référence d'indice donné et présentant un indice de réfraction complexe dont la partie réelle et/ou la partie imaginaire est différente respectivement de la partie réelle et/ou la partie imaginaire de l'indice de réfraction du milieu de référence.

6. Dispositif selon la revendication 5, dans lequel l'objet de référence (105) comprend une particule métallique.

7. Dispositif selon l'une quelconque des revendications 5 ou 6, dans lequel l'objet de référence (105) comprend une particule diélectrique.

8. Dispositif selon l'une quelconque des revendications précédentes, dans lequel le détecteur (119) de phase et d'intensité comprend un masque d'Hartmann modifié.

9. Microscope comprenant :

   - un porte échantillon (107) ;
   - une source d'émission d'un faisceau d'illumination (101) ;
   - un objectif de microscope (109) ;
   - un dispositif (II) de mise au point tridimensionnelle selon l'une quelconque des revendications précédentes ;
   - de moyens de déplacements (122) relatifs du porte échantillon et d'un objectif de microscope selon les trois dimensions.

10. Microscope selon la revendication 9, comprenant des moyens de commande pour transmettre aux moyens de déplacements (122) du microscope la variation calculée de la position tridimensionnelle de l'objet de référence.

11. Méthode de mise au point tridimensionnelle dans un microscope, comprenant :

    - le choix d'un objet de référence (105) dans un milieu de référence d'indice donné, le dit objet de référence étant solidaire d'un porte échantillon (107) et présentant un indice de réfraction complexe dont la partie réelle et/ou la partie imaginaire est différente respectivement de la partie réelle et/ou imaginaire de l'indice de réfraction du dit milieu de référence;
    - l'éclairage de l'objet de référence par une onde lumineuse incidente (1) ;
    - l'acquisition d'au moins une image en phase et en intensité, dans un plan de mesure donné, d'un champ électromagnétique issu de l'interaction de l'onde incidente (1) avec l'objet de référence (105) ;
    - la détermination, à partir de ladite au moins une image en phase et en intensité, d'une variation de position tridimensionnelle de l'objet de référence (105).

12. Méthode de mise au point tridimensionnelle dans un microscope selon la revendication 11, dans laquelle l'objet de référence fait partie de l'échantillon.

13. Méthode de mise au point tridimensionnelle dans un microscope selon l'une quelconque des revendications 11 ou 12, dans laquelle l'objet de référence est externe à l'échantillon et la méthode comprend le positionnement de l'objet de référence dans le milieu de référence.

14. Méthode de mise au point pour microscope l'une quelconque des revendications 11 à 13, comprenant une étape préalable de calibration, l'étape de calibration comprenant la détermination, pour une série de positions axiales de l'objet de référence (105), de l'intensité et de la phase du champ électromagnétique issu de l'interaction de l'onde incidente (1) avec l'objet de référence (105) en un point donné du plan de mesure.

15. Méthode de mise au point pour microscope selon la revendication 14 dans laquelle l'étape de calibration comprend l'acquisition d'au moins une image en phase et en intensité du champ électromagnétique issu de l'interaction de l'onde incidente (1) avec l'objet de référence (105) pour une position axiale de l'objet de référence et le calcul d'images en phase et en intensité pour différentes positions axiales de l'objet de référence obtenues à partir de l'image en phase et en intensité mesurée en utilisant un algorithme de propagation.

16. Méthode de mise au point pour microscope selon l'une quelconque des revendications 11à 15, comprenant en outre la transmission au microscope de la variation calculée de la position tridimensionnelle de l'objet de référence (105).

**Patentansprüche**

1. Vorrichtung (II) zum dreidimensionalen Fokussieren in einem Mikroskop mit gegebener Auflösung, umfassend:

   - einen Detektor (119);
   - ein Berechnungsmittel (121),
   **dadurch charakterisiert, dass**
   der Detektor dazu konfiguriert ist, in einer gegebenen Messebene ein Phasen- und Intensitätsbild eines elektromagnetischen Feldes zu bestimmen, welches aus der Wechselwirkung einer auftreffenden Lichtwelle mit einem Referenzobjekt (105) erzeugt wird, das in einer Referenzumgebung mit einem gegebenen Index angeordnet ist, wobei das Referenzobjekt einen komplexen Brechungsindex hat, dessen Realteil und/oder dessen Imaginärteil von dem Realteil und/oder Imaginärteil des Brechungsindexes der Referenzumgebung jeweils verschieden ist; und dadurch, dass das Berechnungsmittel (121) dazu konfiguriert ist, aus wenigstens einem Phasen- und Intensitätsbild eine dreidimensionale Positionsänderung des Referenzobjekts (105) zu bestimmen.

2. Vorrichtung nach Anspruch 1, umfassend eine Quelle zum Emittieren von Licht zu dem Referenzobjekt (105).

3. Vorrichtung nach einem der vorherigen Ansprüche, wobei die Maße des Referenzobjekts (105) zwischen dem 0,1- und 2-fachen der Auflösung des Mikroskops (I) liegen.

4. Vorrichtung nach einem der vorherigen Ansprüche, wobei die Differenz des Indexes zwischen dem Referenzobjekt und der Referenzumgebung größer oder gleich 0,1 ist, vorteilhafterweise größer oder gleich 0,5 ist.

5. Vorrichtung nach einem der vorherigen Ansprüche, ferner umfassend das Referenzobjekt, wobei das Referenzobjekt dazu bestimmt ist, in einer Referenzumgebung mit einem gegebenen Index positioniert zu sein, und einen komplexen Brechungsindex hat, dessen Realteil und/oder dessen Imaginärteil von dem Realteil und/oder Imaginärteil des Brechungsindexes der Referenzumgebung jeweils verschieden ist.

6. Vorrichtung nach Anspruch 5, wobei das Referenzobjekt (105) einen Metallpartikel umfasst.

7. Vorrichtung nach Anspruch 5 oder 6, wobei das Referenzobjekt (105) einen dielektrischen Partikel umfasst.

8. Vorrichtung nach einem der vorherigen Ansprüche, wobei der Phasen- und Intensitätsdetektor (119) eine modifizierte Hartmann-Maske umfasst.

9. Mikroskop, umfassend:

   - einen Probenhalter (107);
   - eine Quelle zum Emittieren von Licht (101);
   - ein Mikroskopobjektiv (109);
   - eine Vorrichtung (II) zum dreidimensionalen Fokussieren nach einem der vorherigen Ansprüche;
   - ein Mittel zum Bewegen (122) des Probenhalters relativ zu einem Mikroskopobjektiv in drei Richtungen.

10. Mikroskop nach Anspruch 9, umfassend ein Steuerungsmittel zum Übertragen der berechneten dreidimensionalen Positionsänderung des Referenzobjekts an das Mittel zum Bewegen (122) des Mikroskops.

11. Verfahren des dreidimensionalen Fokussierens in einem Mikroskop, umfassend:

    - die Auswahl eines Referenzobjekts (105) in einer Referenzumgebung mit einem gegebenen Index, wobei das Referenzobjekt mit einem Probenhalter (107) fest verbunden ist und einen komplexen Brechungsindex hat, dessen Realteil und/oder dessen Imaginärteil von dem Realteil und/oder Imaginärteil des Brechungsindexes der Referenzumgebung jeweils verschieden ist;
    - die Beleuchtung des Referenzobjekts mit einer auftreffenden Lichtwelle (1);
    - die Aufnahme wenigstens eines Phasen- und Intensitätsbildes eines elektromagnetischen Feldes in einer gegebenen Messebene, welches durch die Wechselwirkung der auftreffenden Welle (1) mit dem Referenzobjekt (105) erzeugt wird;
    - die Bestimmung einer dreidimensionalen Positionsänderung des Referenzobjekts (105) aus wenigstens einem Phasen- und Intensitätsbild.

12. Verfahren des dreidimensionalen Fokussierens in einem Mikroskop nach Anspruch 11, wobei das Referenzobjekt zu der Probe gehört.

13. Verfahren des dreidimensionalen Fokussierens in einem Mikroskop nach Anspruch 11 oder 12, wobei das Referenzobjekt extern der Probe ist und das Verfahren die Positionierung des Referenzobjekts in der Referenzumgebung umfasst.

14. Verfahren des Fokussierens für ein Mikroskop nach einem der Ansprüche 11 bis 13, umfassend einen vorangehenden Kalibrierungsschritt, wobei der Kalibrierungsschritt die Bestimmung der Intensität und der Phase des elektromagnetischen Feldes, welches durch Wechselwirkung der auftreffenden Welle (1) mit dem Referenzobjekt (105) erzeugt wird, in einem gegebenen Punkt der Messebene für eine Reihe von axialen Positionen des Referenzobjekts (105) umfasst.

15. Verfahren des Fokussierens für ein Mikroskop nach Anspruch 14, wobei der Kalibrierungsschritt die Aufnahme wenigstens eines Phasen- und Intensitätsbildes des elektromagnetischen Feldes, welches durch die Wechselwirkung der auftreffenden Welle (1) mit dem Referenzobjekt (105) erzeugt wird, für eine axiale Position des Referenzobjekts und die Berechnung von Phasen- und Intensitätsbildern für unterschiedliche axiale Positionen des Referenzobjekts (105) aus dem gemessenen Phasen- und Intensitätsbild unter Verwendung eines Ausbreitungsalgorithmus umfasst.

16. Verfahren des Fokussierens für ein Mikroskop nach einem der Ansprüche 11 bis 15, ferner umfassend die Übertragung der berechneten dreidimensionalen Positionsänderung des Referenzobjekts (105) an das Mikroskop.

**Claims**

1. A device (II) for three-dimensional focusing in a microscope (I) of given resolution, comprising:

   - a detector (119)
   - calculating means (121)

   **characterized in that**
   said detector is configured to determine, in a given measurement plane, a phase and intensity image of an electromagnetic field resulting from the interaction of an incident light wave with a reference object (105) located in a reference medium of given index, the reference object having a complex refractive index of which the real part and / or the imaginary part is different respectively from the real and / or imaginary part of the refractive index of the reference medium;
   and **in that** said calculating means (121) are configured to determine, from said at least one phase and intensity image, a three-dimensional position variation of the reference object (105).

2. The device as claimed in claim 1, comprising a source for emitting a beam for illuminating the reference object (105).

3. The device as claimed in either one of the preceding claims, wherein the dimensions of the reference object (105) are comprised between 0.1 and 2 times the resolution of the microscope (I).

4. The device as claimed in any one of the preceding claims, wherein the index difference between the reference object and the reference medium is larger than or equal to 0.1 and advantageously larger than or equal to 0.5.

5. The device as claimed in any one of the preceding claims, furthermore comprising said reference object, said reference object being intended to be positioned in a reference medium of given index and having a complex refractive index the real part and/or imaginary part of which is different, respectively, from the real part and/or imaginary part of the refractive index of the reference medium.

6. The device as claimed in claim 5, wherein the reference object (105) comprises a metal particle.

7. The device as claimed in either one of claims 5 and 6, wherein the reference object (105) comprises a dielectric particle.

8. The device as claimed in any one of the preceding claims, wherein the phase and intensity detector (119) comprises a modified Hartmann mask.

9. A microscope comprising:

   - a specimen holder (107);
   - a source for emitting an illuminating beam (101);
   - a microscope objective (109);
   - a device (II) for three-dimensional focusing as claimed in any one of the preceding claims;
   - moving means (122) for moving relatively the specimen holder and a microscope objective in three dimensions.

10. The microscope as claimed in claim 9, comprising controlling means for transmitting to the moving means (122) of the microscope the calculated the three-dimensional position variation of the reference object.

11. A method for three-dimensional focusing in a microscope, comprising:

    - choosing a reference object (105) in a reference medium of given index, said reference object being integral with a specimen holder (107) and having a complex refractive index the real part and/or imaginary part of which is different, respectively, from the real part and/or imaginary part of the refractive index of said reference medium;
    - illuminating the reference object with an incident light wave (1);
    - acquiring at least one phase and intensity image, in a given measurement plane, of an electromagnetic field resulting from the interaction of the incident wave (1) with the reference object (105);
    - determining, from said at least one phase and intensity image, a variation in the three-dimensional position of the reference object (105).

12. The method for three-dimensional focusing in a microscope as claimed in claim 11, wherein the reference object is part of the specimen.

13. The method for three-dimensional focusing in a microscope as claimed in either one of claims 11 and 12, wherein the reference object is external to the specimen and the method comprises positioning the reference object in the reference medium.

14. The microscope focusing method as claimed in any one of claims 11 to 13, comprising a prior calibrating step, the calibrating step comprising determining, for a series of axial positions of the reference object (105), the intensity and phase of the electromagnetic field resulting from the interaction of the incident wave (1) with the reference object (105) at a given point of the measurement plane.

**15.** The microscope focusing method as claimed in claim 14, wherein the calibrating step comprises acquiring at least one phase and intensity image of the electromagnetic field resulting from the interaction of the incident wave (1) with the reference object (105) for one axial position of the reference object and calculating phase and intensity images for various axial positions of the reference object, said images being obtained from the measured phase and intensity image using a propagation algorithm.

**16.** The microscope focusing method as claimed in any one of claims 11 to 15, furthermore comprising transmitting to the microscope the calculated the three-dimensional position variation of the reference object (105).

FIG.1A

FIG.1B

105

107

FIG.2A

105

107

FIG.2B

105

107

FIG.2C

103
105
107

FIG.3A

103
105
107

FIG.3B

103
105
107

FIG.3C

103
107
105

FIG.3D

Intensité
OPD

z = +

FIG.4A
FIG.4D

z = 0

1.02

A.U.

0.86

FIG.4B
FIG.4E

10

nm

-10

z = -

FIG.4C
FIG.4F

FIG.5A

FIG.5B

FIG.6A

FIG.6B

FIG.7A

FIG.7B

FIG.8

EP 3 069 185 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013027518 A
- US 2012300293 A
- DE 102011003807 A1
- WO 20130010859 A1

**Littérature non-brevet citée dans la description**

- **ZEMEK et al.** CRISP nearly eliminates microscopy focus drift. *LASER FOCUS WORLD,* 2012, vol. 48 (9), 9-10
- **P. BON et al.** *Opt. Express,* 2009, vol. 17, 13080
- **SCHNARS et al.** Digital recording and numerical reconstruction of holograms. *Meas. Sci. Technol.,* 2002, vol. 13, R85-R101